Europäisches Patentamt

European Patent Office

Office européen des brevets

(11) Publication number: **0 318 629 B1**

## EUROPEAN PATENT SPECIFICATION

(45) Date of publication of patent specification: **19.02.92**    (51) Int. Cl.5: **B60T 11/16**

(21) Application number: **87830426.0**

(22) Date of filing: **30.11.87**

(54) **Hydraulic pressure generator.**

(43) Date of publication of application:
**07.06.89 Bulletin  89/23**

(45) Publication of the grant of the patent:
**19.02.92 Bulletin  92/08**

(84) Designated Contracting States:
**DE FR GB IT SE**

(56) References cited:
**FR-E- 63 799**
**GB-A- 770 837**
**GB-A- 1 456 274**
**US-A- 3 430 660**

(73) Proprietor: **BENDIX ITALIA S.p.A.**
**Via Cavalli 53 A Casella Postale 66**
**I-26013 Crema(IT)**

(72) Inventor: **Cadeddu, Leonardo**
**Via Stazione 23**
**Crema(IT)**

(74) Representative: **Timoney, Ian Charles Craig et al**
**BENDIX FRANCE Division Technique Service Brevets Bendix Europe 126, rue de Stalingrad**
**F-93700 Drancy(FR)**

## Description

The present invention relates to a hydraulic pressure generator and, more particularly, to such a generator which incorporates a hydraulic pressure damper.

When a hydraulic pressure generator is used as the clutch master-cylinder on an automotive vehicle, vibration of the engine may be transmitted hydraulically to the master-cylinder when the clutch is operated which may result in undesirable clutch pedal vibration experienced by the vehicle driver. The problem is particularly noticeable with large capacity engines and especially diesel engines where there is a definite axial vibration of the crankshaft. This axial vibration is transmitted to the clutch assembly and, when the clutch is operated the vibration of the clutch plate causes a corresponding movement of the piston of the hydraulic actuator for the clutch. This vibrational movement of the actuator piston is transmitted hydraulically to the master-cylinder causing undesirable vibration of the clutch pedal.

A previously proposed solution to this problem of hydraulically transmitted vibration is described in the document GB-A-1,456,274. This document describes a pressure stabilizer for the hydraulic braking circuit of a vehicle in which an expansion chamber is included in one of the hydraulic lines. A piston is slideably mounted in the expansion chamber and is displaceable against a return force provided by a block of elastomeric material.

This device has the disadvantage that the brake line must be cut in order to mount the expansion chamber which, furthermore, must be located in the engine compartment. In addition, the use of a block of elastomeric material does not allow an exact calibration of the pressure necessary to displace the piston.

It is therefore an object of the present inventon to provide a hydraulic pressure generator incorporating a hydraulic pressure damper which is compact, of simple construction and which can easily be calibrated.

A hydraulic pressure generator is known from GB-A-770 837. This generator, used for manually actuating a drum brake, provides a quick movement of the brake shoes into contact with the brake drum and a subsequent easy application of high braking pressure. This generator includes resiliently deformable means destined to deform when the pressure in the working chamber reaches a predetermined value. However this generator does not include a damper piston appropriated to absorb pressure peaks in the working chamber.

According to the present invention, the piston assembly comprises an axial blind bore open to the working chamber and sealingly closed by said damper piston, the closed end of this axial blind bore communicating with a low pressure reservoir.

The invention will now be described by way of example with reference to the accompanying drawings, in which :
- Figure 1 is longitudinal sectional view of a hydraulic pressure generator according to the invention ; and
- Figure 2 is a graph showing the operating characteristics of the pressure generator of Figure 1.

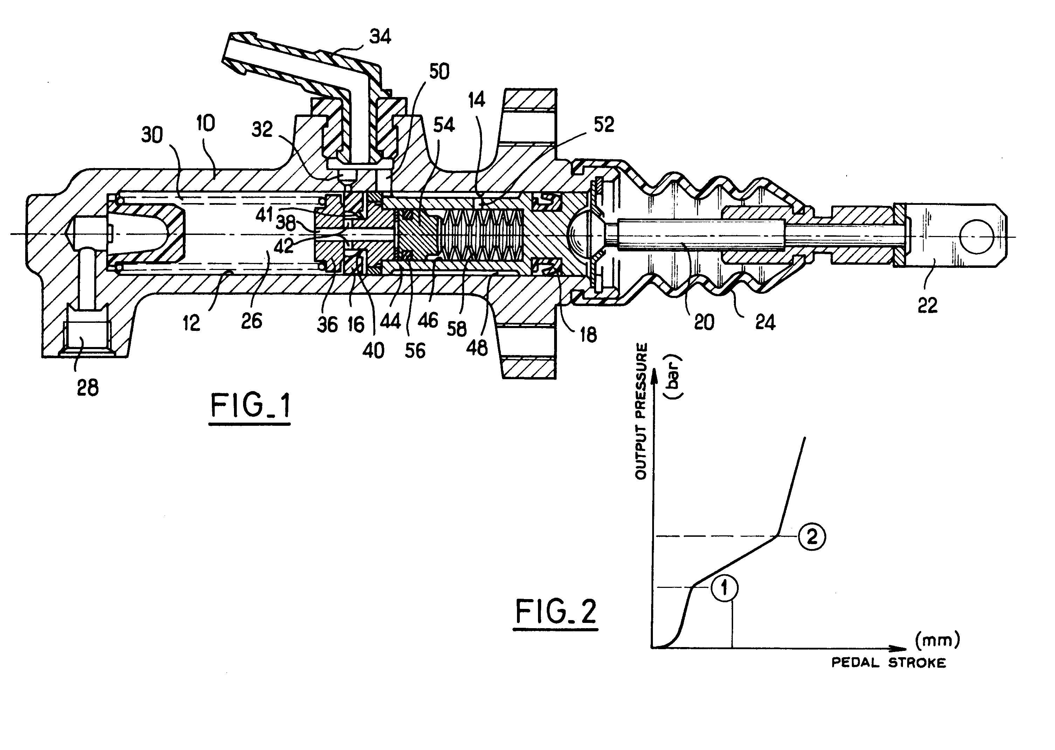

As shown in Figure 1. the hydraulic pressure generator which, in the example shown is a master-cylinder for the clutch of a vehicle, comprises a body 10 in which is formed an axial blind bore 12. A piston assembly, generally shown 14, is slideably mounted in the bore 12 and sealed with respect thereto by annular seals 16 and 18. The piston assembly 14 is selectively displaceable by an input rod 20 the free end 22 of which is connected, in use, to the clutch pedal of the vehicle (not shown). A protective bellows 24 is mounted on the end of the body 10 around the input rod 20.

The piston assembly 14 defines with the closed end of bore 12 a working chamber 26 which is connectable with a hydraulic clutch actuator (not shown) by way of a threaded output connection 28. A return spring 30 is mounted in the bore 12 and urges the piston assembly 14 towards its illustrated rest position.

In the rest position the working chamber 26 communicates with a fluid reservoir (not shown) by way of a passage 32 in the body 10 and a connecting pipe 34. The piston assembly 14 comprises a head 36 in which is formed an axial passage 38. The head 36 also comprises an annular groove 40 which communicates with axial passage 38 by way of radial passage 42. The annular seal 16 includes an annular lip 41 which, in a manner known per se, controls the flow of fluid during operation of the device between the working chamber 26 and the reservoir connecting pipe 34.

In accordance with the invention the piston assembly 14 comprises a body 44 in which is formed an axial bore 46. An annular chamber 48 is defined between the body 44 and the bore 12 and communicates with the reservoir connecting pipe 34 by way of a passage 50 in the body 10. The annual chamber 48 further communicates with the bore 46 by way of a radial passage 52. The master-cylinder further comprises a hydraulic damper mounted in the piston assembly 14. The hydraulic damper comprises a damper piston 54 slideably mounted in the bore 46 and sealed with respect thereto by an annular seal 56. The damper piston is urged to the left (when viewing the drawings) into abutment with the head 36 of the piston assembly 14 by a resilient means which, in the example shown, is comprised by a plurality of Belleville washers 58 which are mounted in the bore 46. At a predetermined pressure differential across it, the damper piston 54 will move back against the force of the Belleville washers 58, thus forming a resiliently deformable means. During this movement of the damper piston 54 fluid in the bore 46 is displaced and flows back to the reservoir by way of passages 52 and 50.

Thus, in operation, the clutch pedal is depressed by the vehicle driver and the piston assembly moves forward to disengage the clutch. In this position, vibration of the engine and, in particular, axial vibration of the crankshaft causes a corresponding vibration of the clutch assembly. This vibration of the clutch assembly is transmitted by the clutch actuating cylinder to the master-cylinder in the form of pressure variations in the hydraulic fluid in the clutch circuit. When these pressure variations exceed a certain magnitude the damper piston 54 moves back against the Belleville washers 58 so absorbing the vibration. When the pressure variation in the fluid decreases the damper piston will move forward again. Thus, the damper piston 54 can absorb the pressure variations in the hydraulic fluid with no resulting movement of the piston assembly 14 or the input rod 20.

Figure 2 is a graph showing the output pressure produced by the master-cylinder for a given pedal stroke. The part of the curve from the origin to point 1 corresponds to the initial actuating stroke of the master-cylinder. The force of the Belleville washers 58 is chosen so that the damper piston 54 begins to move at point 1 on the curve and arives at its maximum stroke at point 2 on the curve. The range which lies between points 1 and 2 corresponds to the vibration phase of the device when in use.

It is envisaged that the damping characteristics may be modified by replacing radial passage 52 with a calibrated restriction. It is further envisaged that the Belleville washers may be replaced with other types of spring, for example a helical spring. It is additionally envisaged that the damper piston 54 and the Belleville washers 58 may be replaced by a block of elastomeric material.

## Claims

1. A hydraulic pressure generator comprising a body (10) in which is formed a principal bore (12), a piston assembly (14) slideably mounted in the bore (12) and defining with the principal bore a working chamber (26) connectable with a hydraulic actuator, the piston assembly (14) being selectively slideable in the principal bore (12) by means of an input rod (20) and comprising a damper piston (54) urged toward a rest position by resilient means (58), characterised in that said piston assembly (14) comprises an axial blind bore (46) open to the working chamber (26) and sealingly closed by said damper piston (54), the closed end of said axial blind bore (46) communicating with a low pressure reservoir.

2. The hydraulic pressure generator according to claim 1 characterised in that said resilient means comprises a plurality of Belleville washers mounted in said axial blind bore (46) between said damper piston (54) and said closed end of said axial blind bore (46).

## Revendications

1. Générateur de pression hydraulique comprenant un corps (10) dans lequel est pratiqué un alésage principal (12), un ensemble piston (14) monté coulissant dans l'alésage (12) et définissant avec ce dernier une chambre de travail (26) reliée au moyen de commande hydraulique,l'ensemble piston (14) pouvant coulisser sélectivement dans l'alésage principal (12) au moyen d'une tige d'entrée (20) et comprenant un piston amortisseur (54) pressé vers une position de repos par un moyen élastique (58) ,caractérisé en ce que l'ensemble piston (14) comprend un alésage axial borgne (46) ouvert à la chambre de travail (26) et fermé de façon étanche par le piston amortisseur (54), l'extrémité fermée de l'alésage axial borgne (46) communiquant avec un réservoir de basse pression.

2. Générateur de pression hydraulique selon la revendication 1, caractérisé en ce que le moyen élastique comprend une pluralité de rondelles Belleville montées dans l'alésage axial borgne (46) entre le piston amortisseur (54) et la dite extrémité fermée de l'alésage axial borgne (46).

## Patentansprüche

1. Hydraulischer Druckgenerator mit einem Gehäuse (10), in dem eine Hauptbohrung (12) gebildet ist, einer Kolbenanordnung (14), die in der Bohrung (12) gleitbar gelagert ist und mit der Hauptbohrung eine Arbeitskammer (26) bildet, die mit einer hydraulischen Betätigungsvorrichtung verbindbar ist, wobei die Kolbenanordnung (14) mittels einer Steuerstange (20) in der Hauptbohrung (12) wahlweise gleitbar ist und einen Dämpferkolben (54) aufweist, der durch elastische Mittel (58) in Richtung auf eine Ruhestellung gedrückt wird, dadurch gekennzeichnet, daß die Kolbenanordnung (14) eine axiale Sackbohrung (46) aufweist, die zur Arbeitskammer (26) offen ist und von dem Dämpferkolben (54) abgedichtet verschlossen wird, wobei das verschlossene Ende der axialen Sackbohrung (46) mit einem Niederdruckreservoir in Strömungsverbindung steht.

2. Hydraulischer Druckgenerator nach Anspruch 1, dadurch gekennzeichnet, daß die elastischen Mittel aus mehreren Tellerfedern bestehen, die in der axialen Sackbohrung (46) zwischen dem Dämpferkolben (54) und dem verschlossenen Ende der axialen Sackbohrung (46) angeordnet sind.

FIG_1

FIG_2

OUTPUT PRESSURE (bar)

PEDAL STROKE

(mm)

EP 0 318 629 B1